# EUROPEAN PATENT APPLICATION

(11) **EP 4 401 182 A1**
(43) Date of publication of application: **17.07.2024**
(21) Application number: 23216162.0
(22) Date of filing: 13.12.2023
(51) Int. Cl.: H01M 10/04, H01M 50/107, H01M 50/533, H01M 50/545, H01M 50/547, H01M 50/559, H01M 50/566, B23K 101/36

(54) **CYLINDRICAL SECONDARY BATTERY AND ELECTRONIC DEVICE**

(30) Priority: 15.12.2022 CN 202211609598
(71) Applicant: Ningde Amperex Technology Ltd., Ningde City, Fujian 352100 (CN)
(72) Inventor: YANG, Zhihua, Ningde City, Fujian Province, People s Republic of China, 352100 (CN); ZHAO, Wei, Ningde City, Fujian Province, People s Republic of China, 352100 (CN); HUANG, Mingyue, Ningde City, Fujian Province, People s Republic of China, 352100 (CN)
(74) Representative: Icosa

(57) **Abstract**

This application discloses a cylindrical secondary battery and an electronic device. The cylindrical secondary battery includes: a housing and a cell assembly. The cell assembly includes a battery cell and a current collecting disc. A bottom of the housing is electrically connected to the current collecting disc by welding. A welding wire track is formed on a side of the bottom of the housing, the side being away from the current collecting disc. The welding wire track includes a first track. The first track is at least an outermost circle track. The first track includes a closed curve. This application can effectively reduce the risk of sealing failure of the housing during laser welding by forming an outermost-circle-closed welding wire track at the bottom of the housing of the cylindrical secondary battery.

## Description

### TECHNICAL FIELD

This application relates to the field of battery technology, and in particular, to a cylindrical secondary battery and an electronic device.

### BACKGROUND

The bottom of a housing of a battery needs to be fixed and connected to a battery cell inside the housing by welding. In the related art, the welding is usually resistance welding. The resistance welding does not completely melt down the housing of the battery, and therefore, will not result in sealing failure of the housing of the battery. However, the resistance welding leads to frequent electrode maintenance and low efficiency of welding. Another practice in the related art is to use laser welding instead of resistance welding. However, the laser welding needs to completely melt down the housing of the battery. In a laser welding process, if welding defects occur such as perforation, blowhole spots, and cracks, the sealing of the housing will fail, thereby increasing the risk of electrolyte leakage of the battery.

### SUMMARY

This application provides a cylindrical secondary battery and an electronic device. A closed welding wire track is formed at a bottom of a housing of the cylindrical secondary battery. The closed welding wire track can reduce the probability of sealing failure of the housing during laser welding.

According to a first aspect, this application provides a cylindrical secondary battery. The cylindrical secondary battery includes a housing and a cell assembly. The cell assembly includes a battery cell and a current collecting disc. A bottom of the housing is electrically connected to the current collecting disc by welding. A welding wire track is formed on a side of the bottom of the housing, the side being away from the current collecting disc. The welding wire track includes a first track. The first track includes a closed curve. The closed curve is set to be at least an outermost circle of the welding wire track. By forming the outermost-circle-closed welding wire track at the bottom of the housing, the housing and the cell assembly placed in the housing form a hermetically closed cavity when the track is closed, thereby significantly reducing the probability of sealing failure of the housing in contrast to the non-closed welding wire track in the prior art.

In some embodiments, the closed curve includes an annular part and an intersection point of two ends of the annular part intersecting each other.

In some embodiments, the welding wire track further includes a second track. The second track is located inside the closed curve.

In some embodiments, the second track includes at least one of a weld point, a straight line, a circle, or a non-closed curve.

In this patent, the welding between the bottom of the housing and the current collecting disc means laser welding. The non-closed curve means any kind of continuous line, including a straight line, a polygonal line, a line segment, an arc, and the like. The closed curve means a closed curve in which at least one intersection point exists. The intersection point may be formed by the two ends of the annular part intersecting each other, or by one end of the annular part crossing the annular part, or by a connecting line that connects the two ends of the annular part.

In some embodiments, both the closed curve and the second track are circles, and the closed curve and the second track are concentric.

In this application, the circle includes a quasi-circle. A difference between a distance from a highest point to a center of the quasi-circle and a distance from a lowest point to the center of the quasi-circle is controlled to be less than 5%, and all the quasi-circles meeting such a criterion are referred to as circles in this application. The highest point is a point of the quasi-circle that is farthest away from the center of the quasi-circle in the radial direction, and the lowest point is a point of the quasi-circle that is closest to the center of the quasi-circle in the radial direction.

In some embodiments, there is at least one intersection point of the closed curve and the second track.

In some embodiments, the closed curve intersects a trailing end of the second track to form at least one intersection point. The trailing end of the second track means an end of the second track curve away from the center of the bottom of the housing. A leading end of the second track means an end of the second track curve near the center of the bottom of the housing.

In some embodiments, the closed curve includes a connecting line and an annular part. The connecting line connects the annular part and the second track to form at least two intersection points.

In some embodiments, on the current collecting disc, a melting depth at a position corresponding to the annular part is denoted as d₀, and a thickness of the current collecting disc is denoted as t₀, satisfying: 1/3 ≤ d₀/t₀ < 2/3.

The melting depth d₀ is a distance between a deepest position of melting on the current collecting disc and the surface of the current collecting disc during laser welding. The thickness t₀ of the current collecting disc is a distance between the two surfaces of the current collecting disc. The depth direction of the melting depth d₀ is the same as the thickness direction of the current collecting disc.

In some embodiments, a connecting portion is disposed at an end of the current collecting disc, the end being oriented toward the bottom of the housing. On the connecting portion, the melting depth at a position corresponding to the annular part is denoted as d₁, and the thickness of the connecting portion is denoted as t₁, satisfying: 1/3 ≤ d₁/t₁ ≤ 2/3.

The melting depth d₁ is a distance between a deepest position of melting on the connecting portion and the surface of the connecting portion during laser welding. The thickness t₁ of the connecting portion is a distance between the two surfaces of the connecting portion. The depth direction of the melting depth d₁ is parallel to the thickness direction of the connecting portion.

In some embodiments, on the current collecting disc, a melting depth at a position corresponding to the intersection point is denoted as d₀', satisfying: d₀ ≤ d₀'.

In some embodiments, on the connecting portion, the melting depth at the position corresponding to the intersection point is denoted as d₁', satisfying: d₁ ≤ d₁'.

In some embodiments, a length of a line segment that connects a point farthest from the center of the bottom of the housing on the closed curve and a center of the bottom of the housing is denoted as L₃, and a radius of the bottom of the housing is denoted as R, satisfying: 0.1 ≤ L₃/R ≤ 0.5.

The point on the closed curve, which is farthest from the center of the bottom of the housing, is a point on the closed curve from which a radial length to the center of the bottom of the housing is the longest. The length of a line segment that connects the point and the center of the bottom of the housing is denoted as L₃.

In some embodiments, a spacing of the welding wire track in a radial direction of the bottom of the housing is denoted as A, and a width of the welding wire track is denoted as B, satisfying: 1.2B < A ≤ 0.5R. Further, the spacing satisfies 1.2B < A< 2B.

In some embodiments, the first track further includes an extension track. The extension track is a specified distance by which the first track extends in any direction from the intersection point. A length of the extension track is denoted as D, satisfying: 1.1 ≤ D/B ≤ 20. Further, the length satisfies 2.5 ≤ D/B ≤ 10.

According to a second aspect, this application provides an electronic device. The electronic device includes any one of the cylindrical secondary batteries disclosed above.

The technical solutions provided in some embodiments of this application bring at least the following beneficial effects:
(1) In this application, an outermost-circle-closed welding wire track (that is, the closed curve in the first track) is disposed at the bottom of the housing of the battery. When the welding wire track is closed, the housing and the current collecting disc form a hermetic cavity to implement the sealing of the battery. Further, other welding wire tracks may be disposed inside the closed curve, for example, the second track mentioned in this application, and may be configured to stabilize the welding effect. A welding defect at any position on the second track will not lead to the sealing failure of the housing of the battery. This application reduces the aggregate welding wire length affecting the sealing of the housing of the battery to the length of the closed curve at the outermost circle, thereby greatly reducing the probability of the sealing failure of the housing.
(2) This application further controls the ratio of the length L₃ of the line segment connecting the farthest point on the closed curve and the center of the bottom of the housing to the radius R of the bottom of the housing to fall within an appropriate range, and controls the spacing A of the welding wire track in the radial direction of the bottom of the housing to fall within an appropriate range. The coordinated settings of such parameters can optimize the length of the closed curve, reduce the risk of occurrence of the welding defects on the closed curve, reduce the probability of the sealing failure of the housing, and in turn, reduce the percentage of electrolyte leakage of the housing.
(3) This application further controls the melting depth of a lower-layer material (that is, the current collecting disc and the connecting portion in this application) at the welding position during the welding to fall within an appropriate range, thereby improving the yield rate of welding, avoiding the defects such as weld cracks and perforations, further reducing the percentage of electrolyte leakage of the housing, and reducing the temperature increment.
(4) In this application, an extension track of a specified length is disposed at a crossing point (that is, the intersection point mentioned in this application) of the welding wire, so as to be compatible with fluctuation of the welding wire track and stabilize the sealing.

### DETAILED DESCRIPTION

To describe the technical solutions in some embodiments of this application or the prior art more clearly, the following outlines the drawings to be used in the description of some embodiments of this application or the prior art. Evidently, the drawings outlined below are merely a part of embodiments of this application. A person skilled in the art may derive other drawings from such drawings without making any creative effort.
FIG. 1 is a schematic diagram of a non-closed welding wire track in the prior art;
FIG. 2 is a schematic diagram of a closed welding wire track according to an embodiment of this application;
FIG. 3 is a schematic diagram of another closed welding wire track according to an embodiment of this application;
FIG. 4 is a schematic diagram of another closed welding wire track according to an embodiment of this application;
FIG. 5 is a schematic diagram of another closed welding wire track according to an embodiment of this application; and
FIG. 6 is a close-up view of FIG. 3.

List of reference numerals: 1. closed curve; 2. second track; 3. extension track; 4. intersection point; 5. connecting line.

### DETAILED DESCRIPTION OF EMBODIMENTS

To make the objectives, technical solutions, and advantages of this application clearer, the following describes this application in further detail with reference to drawings and embodiments. Understandably, the specific embodiments described herein are merely intended to explain this application, but are not intended to limit this application.

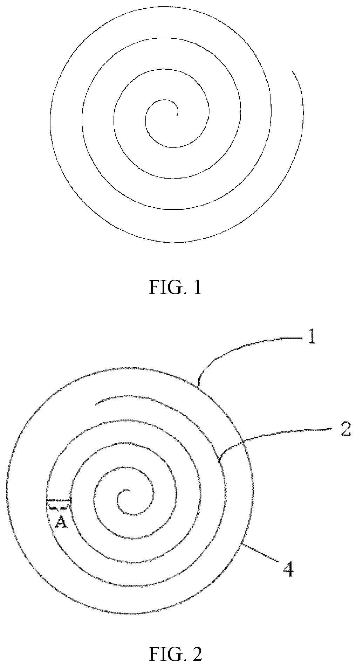

In the prior art, generally, the bottom of a housing of a battery is electrically connected to a cell assembly in the housing by resistance welding. The resistance welding does not completely melt down the bottom of the housing of the battery, but the resistance welding incurs low efficiency of welding and frequent electrode maintenance, thereby greatly increasing the production cost. Therefore, in the related art, laser welding is used instead of resistance welding. The laser welding needs to completely melt down the housing of the battery during welding. In a welding process, if welding defects occur such as perforation, blowhole spots, and cracks, the sealing of the housing will fail, thereby resulting in electrolyte leakage of the battery. Referring to FIG. 1, which shows a circumstance of a non-closed welding wire track at the bottom of the housing in the related art, a welding defect occurring at any position on the entire welding wire will lead to sealing failure of the housing of the battery. Especially, the longer the welding wire, the higher the probability of the welding defects, and in turn, the higher the risk of electrolyte leakage.

To solve the above problem, this application discloses a cylindrical secondary battery. A closed welding wire track is formed at a bottom of a housing of the cylindrical secondary battery to significantly reduce the probability of sealing failure of the housing during laser welding.

### First implementation of the cylindrical secondary battery

The cylindrical secondary battery includes a housing and a cell assembly. The cell assembly includes a battery cell and a current collecting disc. A bottom of the housing is electrically connected to the current collecting disc by welding. A welding wire track is formed on a side of the bottom of the housing, the side being away from the current collecting disc. Referring to FIG. 2, the welding wire track includes a first track and a second track. The first track includes a closed curve. Further, the closed curve is set to be at least an outermost circle of the welding wire track. The first track includes a closed curve 1, and the second track 2 is located inside the closed curve 1. When the closed curve 1 is formed, the housing and the current collecting disc form a hermetic cavity. By disposing the second track 2 inside the closed curve 1, the welding defect will not lead to sealing failure of the housing of the battery even if the welding defect occurs at any position on the second track 2. In other words, by disposing the closed curve 1 located at the outermost circle, this application can effectively reduce the welding wire length that affects the sealing of the battery. Understandably, the longer the welding wire, the higher the probability of the welding defects, and in turn, the higher the risk of electrolyte leakage. In the prior art, the quality of all the welding wires affects the sealing of the housing of the battery. By contrast, in this application, the aggregate welding wire length affecting the sealing of the housing of the battery is reduced to the length of the closed curve 1 at the outermost circle, thereby greatly reducing the probability of sealing failure.

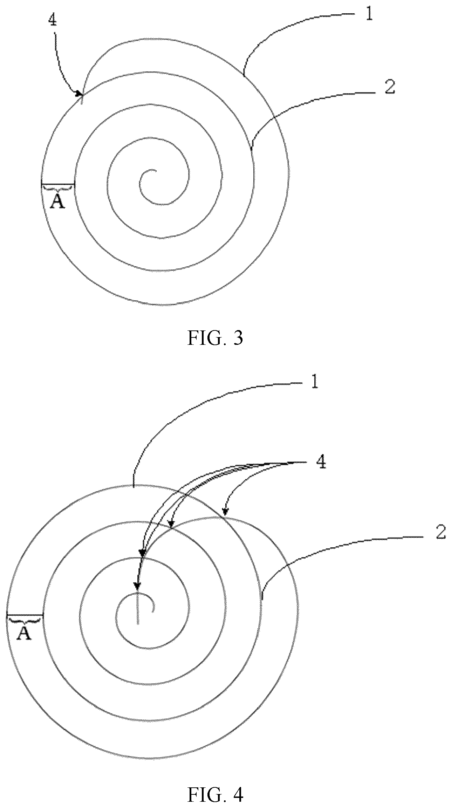

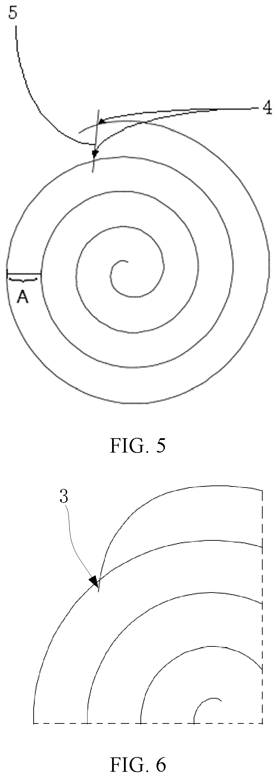

In some exemplary embodiments, the closed curve 1 includes an annular part and an intersection point 4 of two ends of the annular part intersecting each other. The intersection point 4 may be formed by the intersection of the two ends of the annular part, as in FIG. 2; or, the intersection point 4 may be formed by one end of the annular part crossing the annular part, as in FIG. 3 and FIG. 4; or, the intersection point 4 may be formed by a connecting line 5 that connects the first track and the two ends of the annular part, as in FIG. 5.

In some exemplary embodiments, the second track includes at least one of a weld point, a straight line, a circle, or a non-closed curve. The non-closed curve includes a helical curve (as shown in FIG. 2 to FIG. 5.). It is hereby noted that the drawings merely illustrate a part of technical solutions of this application. In principle, all drawings that can be plotted based on the technical solutions described herein fall within the scope of protection of this application, and no more details thereof are to be described herein.

In some exemplary embodiments, both the closed curve and the second track are circles, and the closed curve and the second track are concentric. By making the closed curve and the second track concentric, on the one hand, weld perforation can be avoided, and the welding efficiency at the bottom of the battery can be improved. On the other hand, the reliability of the welding can be improved.

In some exemplary embodiments, there is at least one intersection point 4 of the closed curve 1 and the second track 2.

In some exemplary embodiments, the closed curve 1 intersects the second track 2 to form at least one intersection point. For example, as shown in FIG. 3 to FIG. 5, specifically, in FIG. 3, there is one intersection point 4 of the closed curve 1 and the second track 2; and, in FIG. 4, there are a plurality of intersection points 4 of the closed curve 1 and the second track 2.

In some exemplary embodiments, by using the connecting line 5, two intersection points are formed at a trailing end of the closed curve 1 and the closed curve 1. For example, as shown in FIG. 5, there are two intersection points 4 of the closed curve 1 and the second track 2 in FIG. 5.

Evidently, when there is an intersection point 4 of the closed curve 1 and the second track 2, the length of the closed curve 1 can be optimized conveniently. On the premise of satisfying a sufficient pulling force and a sufficient flow area, the shorter the closed curve 1, the lower the probability of sealing failure of the housing during welding, and in turn, the higher the yield rate of the product.

In some exemplary embodiments, on the current collecting disc, a melting depth at a position corresponding to the annular part is denoted as d₀, and a thickness of the current collecting disc is denoted as t₀, satisfying: 1/3 ≤ d₀/t₀ ≤ 2/3, where 0.1 mm ≤ t₀ ≤ 5 mm. When the welding heat input is overly small, that is, the value of d₀/t₀ is overly small (for example, less than 1/3), the welding strength is low, and stable outermost-circle sealing fails to be formed. In addition, the internal resistance is higher, and the temperature increment is larger, failing to meet the requirements on the tensile force and flow area during the welding. Therefore, an overly small welding heat input leads to failure to form an effective closed curve 1, that is, failure to form a hermetic cavity between the housing of the battery and the cell assembly in the housing. When the welding heat input is overly large, that is, the value of d₀/t₀ is overly large (for example, higher than 2/3), the defects such as weld cracks and perforations are prone to occur during the welding, thereby increasing the probability of sealing failure of the housing of the battery. Controlling the melting depth at the position corresponding to the annular part on the current collecting disc to fall within an appropriate range can reduce both the percentage of electrolyte leakage of the housing and the temperature increment of the battery concurrently.

As an example, the ratio d₀/t₀ of the melting depth d₀ at the position corresponding to the annular part on the current collecting disc to the thickness t₀ of the current collecting disc is 1/3, 5/12, 1/2, 7/12, 2/3, or a value falling within a range formed by any two thereof.

As an example, the thickness t₀ of the current collecting disc is 0.1 mm, 0.3 mm, 0.5 mm, 0.8 mm, 1 mm, 1.5 mm, 2 mm, 2.5 mm, 3 mm, 3.5 mm, 4 mm, 4.5 mm, 5 mm, or a value falling within a range formed by any two thereof.

In some exemplary embodiments, on the current collecting disc, a melting depth at a position corresponding to the intersection point 4 is denoted as d₀', satisfying: d₀ ≤ d₀'.In this way, the melting depth d₀ at the position corresponding to the intersection point 4 on the current collecting disc is caused to be greater than the melting depth d₀ at the position corresponding to the annular part due to remelting.

In this application, the melting depth is measured by cutting the current collecting disc that contains the welding wire track. Specifically, the current collecting disc at the welding wire track is cut along the thickness direction of the current collecting disc to obtain a cross-section containing the welding wire track, and the cross-section is observed in a microscope to obtain the value of the melting depth.

A specific measurement method of the melting depth may be: Selecting 5 measurement points randomly on the cross-section containing the welding wire track, selecting a microscope of an appropriate magnification, observing each measurement point to obtain a measured value, and averaging out the measured values to obtain the melting depth at the welding wire track.

In some exemplary embodiments, a length of a line segment that connects a point farthest from the center of the bottom of the housing on the closed curve 1 and a center of the bottom of the housing is denoted as L₃, and a radius of the bottom of the housing is denoted as R, satisfying: 0.1 ≤ L₃/R ≤ 0.5, where 5 mm ≤ R ≤ 200 mm. If the ratio is overly small (for example, less than 0.1), the effective welding area will be overly small, thereby resulting in poor welding between the current collecting disc and the bottom of the housing. Consequently, the internal resistance of the battery is higher, the temperature increment is larger, and thermal cracks are prone occur, thereby being unfavorable to the stability of the welding. If the ratio is overly large (for example, greater than 0.5), the welding wire is overly long, and the probability of occurrence of the welding failure points increases. Consequently, the current collecting disc is prone to be perforated by welding, thereby resulting in sealing failure, and increasing the risk of electrolyte leakage.

A specific measurement method of the length L₃ may be: Denoting a point farthest from the center of the bottom of the housing on the closed curve as G, making a radial extension line from G to the center G' of the bottom of the housing, measuring a radial distance between G and G' for 3 consecutive times, and averaging out the measured values to obtain the length of L₃.

As an example, a length of a line segment that connects a point farthest from the center of the bottom of the housing on the closed curve 1 and a center of the bottom of the housing is denoted as L₃, and a radius of the bottom of the housing is denoted as R. The ratio of L₃ to R is: 0.1, 0.2, 0.3, 0.4, 0.5, or a value falling within a range formed by any two thereof.

As an example, the radius R of the bottom of the housing is 2.5 mm, 3 mm, 6 mm, 8 mm, 10 mm, 15mm, 20 mm, 25 mm, 30 mm, 35 mm, 45 mm, 50 mm, 60 mm, 75 mm, 80 mm, 100 mm, 110 mm, 120 mm, 130 mm, 140 mm, 150 mm, 160 mm, 170 mm, 180 mm, 190 mm, 200 mm, or a value falling within a range formed by any two thereof.

In some exemplary embodiments, a spacing of the welding wire track in a radial direction of the bottom of the housing is denoted as A, and a width of the welding wire track is denoted as B, satisfying: 1.2B < A ≤ 0.5R, where 0.05 mm ≤ B ≤ 1 mm. By controlling the spacing A of the welding wire track in the radial direction and controlling the ratio of the value of A to the width B of the welding wire track to fall within an appropriate range, this application optimizes the length of the closed curve 1. The shorter the closed curve 1, the lower the probability of welding defects, and the lower the probability of sealing failure of the housing. Preferably, the spacing satisfies 1.2B < A < 2B. In this case, the welding wire length of the closed curve 1 is the shortest, thereby effectively reducing the risk of occurrence of welding defects on the closed curve 1 on the premise of satisfying the requirements on the tensile force and the flow area during the welding, and in turn, reducing the probability of sealing failure. The welding wire track includes the closed curve 1 and a second track 2. The spacing A means a distance between the closed curve 1 and the second track 2 inside the closed curve. For example, the second track 2 is a weld point. There may be a single weld point or a plurality of weld points. The spacing A between the closed curve 1 and the weld point in the radial direction means a distance between the single weld point and the closed curve in the radial direction, or a distance between a weld point closest to the closed curve among a plurality of weld points (a weld point with the shortest distance in the radial direction) and the closed curve in the radial direction. For another example, the second track 2 is a straight line, and the spacing A between the closed curve 1 and the straight line in the radial direction means a distance between an end of the straight line closest to the closed curve (the end with the shortest distance in the radial direction) and the closed curve in the radial direction. For another example, the second track 2 is a circle or a non-closed curve, and the spacing A between the closed curve 1 and the circle or non-closed curve in the radial direction is a distance between a point closest to the closed curve on the circle or non-closed curve (the point with the shortest distance in the radial direction) and the closed curve in the radial direction.

A specific measurement method of the width of the welding wire track may be: Selecting 5 measurement points, selecting a microscope of an appropriate magnification, observing each measurement point to obtain a measured value, and averaging out the measured values to obtain the track width B. As an example, the width B of the welding wire track is 0.05 mm, 0.1 mm, 0.2 mm, 0.3 mm, 0.4 mm, 0.5 mm, 1 mm, or a value falling within a range formed by any two thereof.

In some exemplary embodiments, the first track further includes an extension track 3. The length of the extension track 3 is denoted as D, satisfying: 1.1 ≤ D/B ≤ 20. The welding wire track fluctuates to some extent. After the sealing is implemented by the intersection point 4, it is necessary to leave an extension length for purposes of compatibility and stabilized sealing. When the length D of the extension track 3 is overly short (for example, D/B is lower than 1.1), the overly short extension track 3 is unable to implement stable sealing. In addition, the overly short extension track 3 increases the risk of failure to effectively close the outermost-circle track, that is, failure to form the closed curve 1 of this application. When the length D of the extension track 3 is overly long (for example, D/B is higher than 20), new blowhole spots are prone occur, thereby being unfavorable to reducing the probability of sealing failure. Preferably, the ratio satisfies 2.5 ≤ D/B ≤ 10. In this case, the resulting extension track 3 is the shortest, and can meet the requirement of stable sealing, further reduce the risk of occurrence of welding defects on the extension track 3, and in turn, reduce the probability of sealing failure.

### Second implementation of the cylindrical secondary battery

Unlike the first implementation, the bottom of the housing of the battery in the second implementation is welded to the connecting portion of the current collecting disc. Specifically, a connecting portion is disposed at an end of the current collecting disc, the end being oriented toward the bottom of the housing. On the connecting portion, the melting depth at a position corresponding to the annular part is denoted as d₁, and the thickness of the connecting portion is denoted as t₁, satisfying: 1/3 ≤ d₁/t₁ ≤ 2/3. The thickness t₁ of the connecting portion falls within the range of 0.08 mm ≤ t₁ ≤ 3 mm.

As an example, the ratio d₁/t₁ of the melting depth d₁ at the position corresponding to the annular part on the connecting portion to the thickness t₁ of the connecting portion is 1/3, 5/12, 1/2, 7/12, 2/3, or a value falling within a range formed by any two thereof.

As an example, the thickness t₁ of the connecting portion is 0.08 mm, 0.1 mm, 0.3 mm, 0.5 mm, 0.8 mm, 1 mm, 1.2 mm, 1.4 mm, 1.6 mm, 1.8 mm, 2 mm, 2.5 mm, 3 mm, or a value falling within a range formed by any two thereof.

In some exemplary embodiments, on the connecting portion, the melting depth at the position corresponding to the intersection point 4 is denoted as d₁', satisfying: 0 ≤ d₁' ≤ d₁.

### Electronic device

The electronic device includes any one of the cylindrical secondary batteries described above. The electronic device according to this application is applicable to, but not limited to use in, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The following describes this application in further detail with reference to specific embodiments.

### Embodiment 1

The cell assembly is placed in a housing, and the radius of the bottom of the housing is 12 mm. The bottom of the housing is welded to a negative current collecting disc at one end of the cell assembly or to a connecting portion of the negative current collecting disc by laser welding. An electrolyte solution is injected into the cell assembly after drying. A positive current collecting disc at the other end of the cell assembly is welded to a cap. The cap is positively charged. Finally, the end cap is hermetically welded to the housing through laser welding, so as to form a cylindrical secondary battery. The first track in the welding tracks formed at the bottom of the housing of the cylindrical battery contains a closed curve. The parameters in the welding process are shown in Embodiment 1 in Table 1, and the test results are shown in Table 1.

### Embodiments 2 to 12

Different from Embodiment 1, the parameters in the welding process are shown in Embodiments 2 to 12 in Table 1, and the test results are shown in Table 1.

### Comparative Embodiment 1

Different from Embodiment 1, the parameters in the welding process are shown in Comparative Embodiment 1 in Table 1, the welding track formed at the bottom of the housing of the cylindrical battery is a non-closed curve, and the test results are shown in Table 1.

### Helium test

Before the battery is sealed, the battery is filled with helium inside and then placed in a negative pressure environment to detect the volume of helium leaking from the battery.

Percentage of electrolyte leakage = helium volume V₂ inside the battery (placed in a negative pressure environment)/helium volume V₁ inside the battery (before being placed in the negative pressure environment) × 100%.

### Temperature increment test

A fully charged battery is discharged to 3.0 V by using a current of 10 C, and the change in the temperature of the battery cell is detected.

Temperature increment (°C) = maximum temperature of the battery cell during discharge (°C) - room temperature (°C).

**Table 1**

| Embodiment | Radius of bottom of housing (mm) | Total length of welding wire (mm) | Closed ? | L₃/R | Length of closed curve (mm) | Length of second track (mm) | d₀/t₀ or d₁/t₁ | Electrolyte leakage ratio | Temperature increment (°C) |
|---|---|---|---|---|---|---|---|---|---|
| Embodiment 1 | 12 | 48 | Yes | 0.1 | 7.536 | 40.464 | 1/2 | 0.10% | 47 |
| Embodiment 2 | 12 | 48 | Yes | 0.5 | 37.68 | 10.32 | 1/2 | 0.16% | 42 |
| Embodiment 3 | 12 | 48 | Yes | 0.2 | 15.072 | 32.928 | 1/2 | 0.11% | 46 |
| Embodiment 4 | 12 | 48 | Yes | 0.4 | 30.144 | 17.856 | 1/2 | 0.13% | 43 |
| Embodiment 5 | 12 | 48 | Yes | 0.3 | 22.608 | 25.392 | 1/2 | 0.12% | 44 |
| Embodiment 6 | 12 | 48 | Yes | 0.6 | 45.216 | 2.784 | 1/2 | 0.30% | 41 |
| Embodiment 7 | 12 | 48 | Yes | 0.05 | 3.768 | 44.232 | 1/2 | 0.07% | 50 |
| Embodiment 8 | 12 | 48 | Yes | 0.3 | 22.608 | 25.392 | 1/3 | 0.115% | 48 |
| Embodiment 9 | 12 | 48 | Yes | 0.3 | 22.608 | 25.392 | 2/3 | 0.128% | 42 |
| Embodiment 10 | 12 | 48 | Yes | 0.3 | 22.608 | 25.392 | 1/4 | 0.100% | 50 |
| Embodiment 11 | 12 | 48 | Yes | 0.3 | 22.608 | 25.392 | 5/12 | 0.125% | 46 |
| Embodiment 12 | 12 | 48 | Yes | 0.3 | 22.608 | 25.392 | 3/4 | 0.15% | 41 |
| Comparative Embodiment 1 | 12 | 48 | No | - | 0 | 48 | 1/2 | 1% | 44 |

As can be learned from Embodiments 1 to 12 versus Comparative Embodiment 1, in Comparative Embodiment 1, a total length of the welding wire is 48 mm and the welding wire track contains no closed curve at the outermost circle, and therefore, the electrolyte leakage ratio is as high as 1%, and the temperature increment is 44 °C. In Embodiments 1 to 12, the total length of the welding wire is 48 mm and the welding wire track contains a closed curve at the outermost circle, and therefore, the electrolyte leakage ratio in all such embodiments is less than 0.30%. As can be seen, with the same welding wire length, the closed curve at the outermost-circle in Embodiments 1 to 12 can significantly reduce the electrolyte leakage ratio by approximately 0.7% in contrast to Comparative Embodiment 1 containing no a closed curve.

As can be learned from Embodiments 1 and 3 versus Embodiments 2 and 4 to 5, the L₃/R values of Embodiments 1 and 3 are 0.1 and 0.2, respectively, and the corresponding electrolyte leakage ratios are 0.1% and 0.11%, respectively, but the temperature increments in Embodiments 1 and 3 are relatively high, and are at least 45 °C. In Embodiments 2 and 4 to 5, the L₃/R values fall within the range of 0.3 to 0.5. Although the electrolyte leakage ratios are slightly higher than those in Embodiments 1 and 3, the temperature increments in Embodiments 2 and 4 to 5 are below 45 °C, and even as low as 42 °C. In addition, the electrolyte leakage ratios in Embodiments 2 and 4 to 5 are significantly lower than those in Comparative Embodiment 1 by approximately 0.85%. Evidently, further adjustment of the L₃/R values in Embodiments 2 and 4 to 5 brings a significant effect in controlling the temperature increment although the L₃/R values are slightly lower than that in Embodiments 1 and 3.

The L₃/R values in Embodiments 6 to 7 are 0.6 and 0.05, respectively. When the L₃/R value is further increased to 0.6, although the corresponding temperature increment is merely 41 °C, the electrolyte leakage ratio is significantly increased, and is as high as 0.3%. When the L₃/R value is further decreased to 0.05, although the corresponding electrolyte leakage ratio is merely 0.07%, the temperature increment is significantly increased to 50 °C. Therefore, controlling the L₃/R value to fall within an appropriate range can optimize the electrolyte leakage ratio and reduce the temperature increment.

As can be learned from Embodiments 8 to 12 versus Embodiment 5, the L₃/R values in Embodiments 8 to 12 and Embodiment 5 are all 0.3. In Embodiments 9 and 12, the d/t values (d₀/t₀ or d₁/t₁) are controlled to be between 2/3 and 3/4, and the electrolyte leakage ratio is roughly the same as that in Embodiment 5. However, the temperature increments in Embodiments 9 and 12 are obviously lower than the temperature increment in Embodiment 5. As can be seen, with the L₃/R value being constant, further adjustment of the d/t value can further reduce the temperature increment while reducing the electrolyte leakage ratio concurrently. In Embodiments 8 and 10 to 11, the d/t values are between 1/4 and 5/12. In contrast to Embodiment 5, although the electrolyte leakage ratio is slightly reduced, the temperature increment is significantly higher than that in Embodiment 5, failing to implement concurrent reduction of both the electrolyte leakage ratio and the temperature increment.

What is described above is merely exemplary embodiments of this application, but is not intended to limit this application. Any modifications, equivalent substitutions, and improvements made without departing from the spirit and principles of this application still fall within the protection scope of this application.

## Claims

1. A cylindrical secondary battery, **characterized in that** the battery comprises: a housing and a cell assembly;
the cell assembly comprises a battery cell and a current collecting disc;
a bottom of the housing is electrically connected to the current collecting disc by welding;
a welding wire track is formed on a side of the bottom of the housing, the side being away from the current collecting disc;
the welding wire track comprises a first track;
the first track comprises a closed curve (1); and
the closed curve (1) is set to be at least an outermost circle of the welding wire track.

2. The cylindrical secondary battery according to claim 1, **characterized in that** the closed curve (1) comprises an annular part and an intersection point (4) of two ends of the annular part intersecting each other.

3. The cylindrical secondary battery according to claim 1, **characterized in that** the welding wire track further comprises a second track (2), and the second track (2) is located inside the closed curve (1).

4. The cylindrical secondary battery according to claim 3, **characterized in that** both the closed curve (1) and the second track (2) are circles, and the closed curve (1) and the second track (2) are concentric.

5. The cylindrical secondary battery according to any one of claims 3-4, **characterized in that** there is at least one intersection point (4) of the closed curve (1) and the second track (2).

6. The cylindrical secondary battery according to any one of claims 3-5, **characterized in that** the closed curve (1) intersects a trailing end of the second track (2) to form the intersection point (4).

7. The cylindrical secondary battery according to any one of claims 3-5, **characterized in that** the closed curve (1) comprises a connecting line (5) and an annular part, and the connecting line (5) connects the annular part and the second track (2) to form at least two intersection points (4).

8. The cylindrical secondary battery according to any one of claims 2-7, **characterized in that**, on the current collecting disc, a melting depth at a position corresponding to the annular part is denoted as d₀, and a thickness of the current collecting disc is denoted as t₀, satisfying: 1/3 ≤ d₀/t₀ ≤ 2/3.

9. The cylindrical secondary battery according to any one of claims 2-7, **characterized in that** a connecting portion is disposed at an end of the current collecting disc, the end being oriented toward the bottom of the housing; and
a melting depth at a position corresponding to the annular part on the connecting portion is denoted as d₁, and a thickness of the connecting portion is denoted as t₁, satisfying: 1/3 ≤ d₁/t₁ ≤ 2/3.

10. The cylindrical secondary battery according to any one of claims 2-8, **characterized in that**, on the current collecting disc, a melting depth at a position corresponding to the intersection point 4 is denoted as d₀', satisfying: d₀ ≤ d₀'.

11. They cylindrical secondary battery according to claim 9, **characterized in that**, on the connecting portion, a melting depth at a position corresponding to the intersection point 4 is denoted as d₁', satisfying: d₁ ≤ d₁'.

12. The cylindrical secondary battery according to any one of claims 1-7, **characterized in that** a length of a line segment that connects a point farthest from the center of the bottom of the housing on the closed curve (1) and a center of the bottom of the housing is denoted as L₃, and a radius of the bottom of the housing is denoted as R, satisfying: 0.1 ≤ L₃/R ≤ 0.5.

13. The cylindrical secondary battery according to claim 12, **characterized in that** a spacing of the welding wire track in a radial direction of the bottom of the housing is denoted as A, and a width of the welding wire track is denoted as B, satisfying: 1.2B < A ≤ 0.5R.

14. The cylindrical secondary battery according to any one of claims 1-7, **characterized in that** the first track further comprises an extension track (3), a length of the extension track (3) is denoted as D, and a width of the welding wire track is denoted as B, satisfying: 1.1 ≤ D/B ≤ 20.

15. An electronic device, **characterized in that** the electronic device comprises the cylindrical secondary battery according to any one of claims 1 to 14.
